(19) Europäisches Patentamt
European Patent Office
Office européen des brevets

(11) **EP 4 119 808 A1**

(12) **EUROPEAN PATENT APPLICATION**
published in accordance with Art. 153(4) EPC

(43) Date of publication:
**18.01.2023 Bulletin 2023/03**

(21) Application number: **21768365.5**

(22) Date of filing: **12.03.2021**

(51) International Patent Classification (IPC):
**F16C 19/06** (2006.01)  **F16C 33/78** (2006.01)
**F16J 15/3204** (2016.01)  **F16J 15/3268** (2016.01)
**A61C 1/05** (2006.01)  **A61C 1/08** (2006.01)

(52) Cooperative Patent Classification (CPC):
**A61C 1/05; A61C 1/08; F16C 19/06; F16C 33/78;**
**F16J 15/3204; F16J 15/3268**

(86) International application number:
**PCT/JP2021/010228**

(87) International publication number:
**WO 2021/182637 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.03.2020  JP 2020042731**
**05.02.2021  JP 2021017471**

(71) Applicant: **NSK Ltd.**
**Tokyo 141-8560 (JP)**

(72) Inventors:
• **OYAMA, Takuya**
**Fujisawa-shi, Kanagawa 251-8501 (JP)**
• **SUZUKI, Hironori**
**Fujisawa-shi, Kanagawa 251-8501 (JP)**

(74) Representative: **Grünecker Patent- und
Rechtsanwälte
PartG mbB
Leopoldstraße 4
80802 München (DE)**

(54) **ROLLING BEARING**

(57) This rolling bearing (10) comprises: an outer race (11) having an outer raceway surface (11a) on the inner peripheral surface thereof; an inner race (12) having an inner raceway surface (12a) on the outer peripheral surface thereof; a plurality of rolling elements (13) disposed so as to be capable of rolling between the outer raceway surface (11a) and the inner raceway surface (12a); and a seal member (20) which is fixed by a retaining ring (30) to a seal mounting groove (15) formed in an axial-direction end of the outer race (11), and seals an axial-direction end of a bearing internal space (10a) between the outer race (11) and the inner race (12). The seal member (20) has a protrusion (21a) on a radial-direction outer end thereof, the outer diameter of the seal member (20) is greater than the outer diameter of the retaining ring (30) in the seal mounting groove (15), and the radial-direction outer end of the seal member (20) is interposed between the inner peripheral surface of the seal mounting groove (15) and the outer peripheral surface (30a) of the retaining ring (30).

*FIG. 1*

**Description**

TECHNICAL FIELD

The present invention relates to a rolling bearing, and particularly to a rolling bearing used in air turbines.

BACKGROUND ART

As a rolling bearing for dental air turbines in the related art, one using a sealing member suitable for ultra-high speed rotation is known (see, for example, Patent Literature 1). The rolling bearing includes an outer ring, an inner ring, a plurality of balls arranged between the outer ring and the inner ring, a cage that rotatably holding the plurality of balls, an annular sealing member provided between the outer ring and the inner ring, and a retaining ring that mounts the sealing member to the outer ring. The sealing member is not provided with any metal insert and is made of only an elastic material so that the sealing member can be easily opened and closed when compressed air is supplied or stopped.

Patent Literature 1: JP-A-2017-211076

SUMMARY OF INVENTION

However, in the rolling bearing described in Patent Literature 1, the sealing member is fixed to a groove portion of the outer ring by a pressing force in a thrust direction of the retaining ring. For this reason, when the rolling bearing is used in a situation where compressed air for rotating turbine blades acts on the sealing member toward an outside of the bearing, further strong fixing may be required to prevent the sealing member from coming off. In such a case, if a means for fixing in a radial direction can be provided, the sealing member can be more strongly fixed.

The present invention is made in view of the above-mentioned problems, and an object of the present invention is to provide a rolling bearing with a stronger binding force on a sealing member.

The above object of the present invention is achieved by the following configurations.

(1) A rolling bearing, including:

an outer ring including an outer ring raceway surface on an inner peripheral surface;
an inner ring including an inner ring raceway surface on an outer peripheral surface;
a plurality of rolling elements rotatably arranged between the outer ring raceway surface and the inner ring raceway surface; and
a sealing member fixed to a seal mounting groove formed on an axial end portion of the outer ring by a retaining ring, the sealing member sealing an axial end portion of a bearing internal space between the outer ring and the inner ring, in which
the sealing member includes a protruding portion at a radial outer end portion, and
an outer diameter of the sealing member is larger than an outer diameter of the retaining ring in the seal mounting groove.

(2) The rolling bearing according to (1), in which
the seal mounting groove includes:

a groove bottom surface that is in contact with an outer peripheral surface of the sealing member,
a tapered surface that is provided axially outboard of the groove bottom surface, connects the groove bottom surface and the inner peripheral surface of the outer ring, and is in contact with the retaining ring, and
a groove inner surface that is provided axially inboard of the groove bottom surface, and is in contact with an axial inner surface of the sealing member.

(3) The rolling bearing according to (2), in which
the radial outer end portion of the sealing member is sandwiched between an inner peripheral surface of the seal mounting groove and an outer peripheral surface of the retaining ring.

(4) The rolling bearing according to (3), in which
a projecting portion is provided on the groove bottom surface of the seal mounting groove so as to be radially opposite to the outer peripheral surface of the retaining ring and axially inboard of a tip of the protruding portion of the sealing member.

(5) The rolling bearing according to any one of (1) to (4), in which the rolling bearing is used for dental air turbines.

According to the present invention, since the sealing member includes the protruding portion on the radial outer end portion, a binding force in a radial direction on the sealing member can be generated. Therefore, the binding force on the sealing member can be further increased.

BRIEF DESCRIPTION OF DRAWINGS

[Fig. 1] Fig. 1 is an enlarged cross-sectional view of a head portion of a dental air turbine hand piece in which a first embodiment of a rolling bearing according to the present invention is adopted.
[Fig. 2] Fig. 2 is a cross-sectional view of the rolling bearing shown in Fig. 1.
[Fig. 3] Fig. 3 is an enlarged cross-sectional view of a periphery of a retaining ring shown in Fig. 2.
[Fig. 4] Fig. 4 is an enlarged cross-sectional view of a state before mounting of the sealing member shown in Fig. 2.
[Fig. 5] Fig. 5 is an enlarged cross-sectional view of a periphery of a retaining ring in a second embodiment.
[Fig. 6] Fig. 6 is a cross-sectional view showing a stopped state of a rolling bearing in a third embodiment.
[Fig. 7] Fig. 7 is a cross-sectional view of a sealing member shown in Fig. 6.
[Fig. 8] Fig. 8 is a cross-sectional view taken along a line VIII-VIII in Fig. 6, showing a retaining ring inserted into an outer ring over an entire periphery.

DESCRIPTION OF EMBODIMENTS

Hereinafter, embodiments of a rolling bearing according to the present invention will be described in detail with reference to the drawings.

(First Embodiment)

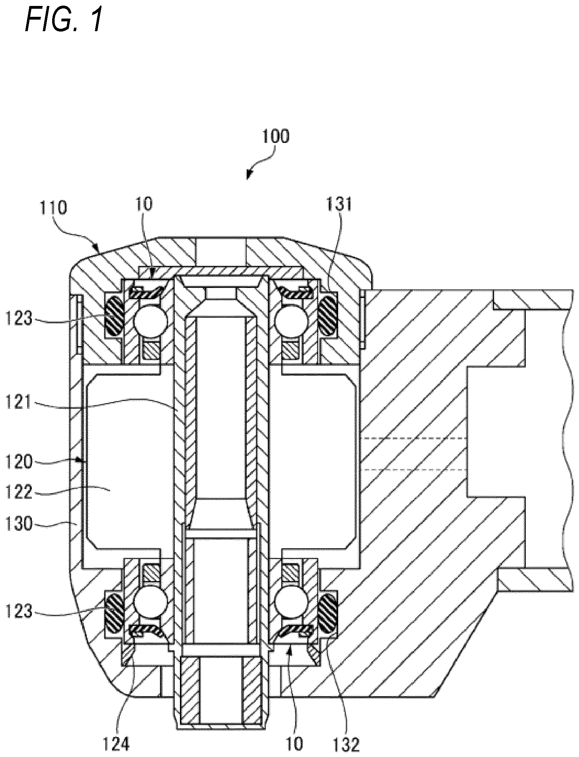

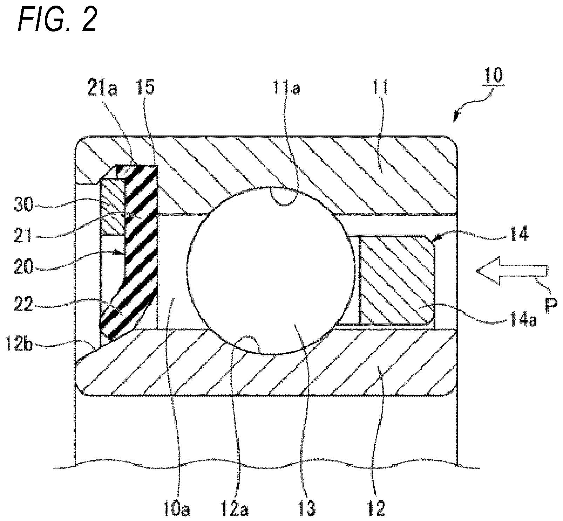

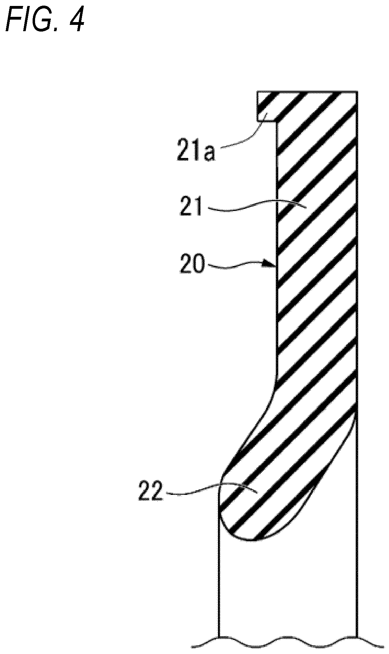

First, an embodiment of the rolling bearing according to the present invention will be described with reference to Figs. 1 to 4.
A rolling bearing 10 of the present embodiment is used for, for example, a dental air turbine, and is adopted in a bearing unit 120 of a head portion 110 of a dental air turbine hand piece 100. The bearing unit 120 includes a rotation shaft 121 including one end to which a tool (for example, a dental treatment tool) can be mounted, a turbine blade 122 integrally fixed to the rotation shaft 121 and rotated by compressed air, and a pair of rolling bearings 10 that rotatably support the rotation shaft 121 with respect to a housing 130.
The rolling bearings 10 are supported by the housing 130 via rubber rings 123 mounted on annular recessed portions 131 and 132 of the housing 130. The rolling bearing 10 on one side (lower side in Fig. 1) is biased toward the rolling bearing 10 on the other side (upper side in Fig. 1) by a spring washer 124.
As shown in Fig. 2, the rolling bearing 10 includes an outer ring 11 including an outer ring raceway surface 11a on an inner peripheral surface, an inner ring 12 including an inner ring raceway surface 12a on an outer peripheral surface, a plurality of balls (rolling elements) 13 rotatably arranged between the outer ring raceway surface 11a and the inner ring raceway surface 12a, a cage 14 that holds the plurality of balls 13 at substantially equal intervals in a circumferential direction, and a sealing member 20 that is fixed by a retaining ring 30 to a seal mounting groove 15 formed on one axial end portion (left end portion in Fig. 2) of the inner peripheral surface of the outer ring 11 and seals one axial end portion of a bearing internal space 10a between the outer ring 11 and the inner ring 12. The inner ring 12 is fixed to the rotation shaft 121 and rotates together with the rotation shaft 121. The outer ring 11 is fixed to the housing 130. In an axial direction of the rolling bearing 10, when the outer ring raceway surface 11a and the inner ring raceway surface 12a are used as references, a direction closer to the outer ring raceway surface 11a and the inner ring raceway surface 12a is defined as axially inboard, and a direction away from the outer ring raceway surface 11a and the outer ring raceway surface 12a is defined as axially outboard. The rolling bearing 10 is not limited to the illustrated deep groove ball bearing, and may be an angular contact ball bearing.
The cage 14 is a crown-type cage, and an annular rim portion 14a is disposed on an upstream side (right side in Fig. 2) of a compressed air supply direction with respect to the balls 13. An arrow P in Fig. 2 indicates a direction in which the compressed air flows. The cage 14 is not limited to the crown-type cage.
The sealing member 20 is an annular member, does not include any metal insert, and is made only of an elastic member. The sealing member 20 is disposed on a downstream side (left side in Fig. 2) in the compressed air supply direction with respect to the balls 13.
As shown in Figs. 2 and 4, the sealing member 20 includes an annular base 21 that extends along a radial direction, and a lip portion 22 that extends obliquely radially inboard and axially outboard from a radially inner end of the base 21 and that is in contact with the outer peripheral surface of the inner ring 12. As shown in Fig. 4, an outer end portion of the base 21 of the sealing member 20 alone before being mounted on the outer ring 11 includes a protruding portion 21a that extends in a direction so as to be axially outboard when being mounted on the outer ring 11.

An outer peripheral portion of the sealing member 20 is fixed, by the retaining ring 30, to the seal mounting groove 15 formed on one axial end portion (the left end portion in Fig. 2) of the inner peripheral surface of the outer ring 11. The retaining ring 30 is preferably a ring-shaped member having a rectangular cross section, such as a C-shaped retaining ring, which is partially divided. An outer diameter of the sealing member 20 is set to be larger than an outer diameter of the retaining ring 30 in the seal mounting groove 15.

Examples of a material of the sealing member 20 can include water-resistant acrylic rubber having a Shore-A hardness (JIS K 6253) of 60 to 90 and general water-resistant fluorine-containing rubber having a Shore-A hardness of 60 to 90. By using the above-mentioned materials for the sealing member 20, appropriate elastic properties can be obtained, and durability and wear resistance can be improved.

An inclined surface 12b that is in contact with the lip portion 22 of the sealing member 20 is formed on one axial end portion (left end portion in Fig. 2) of the outer peripheral surface of the inner ring 12. The inclined surface 12b is formed such that a diameter thereof gradually decreases toward an axially outboard side.

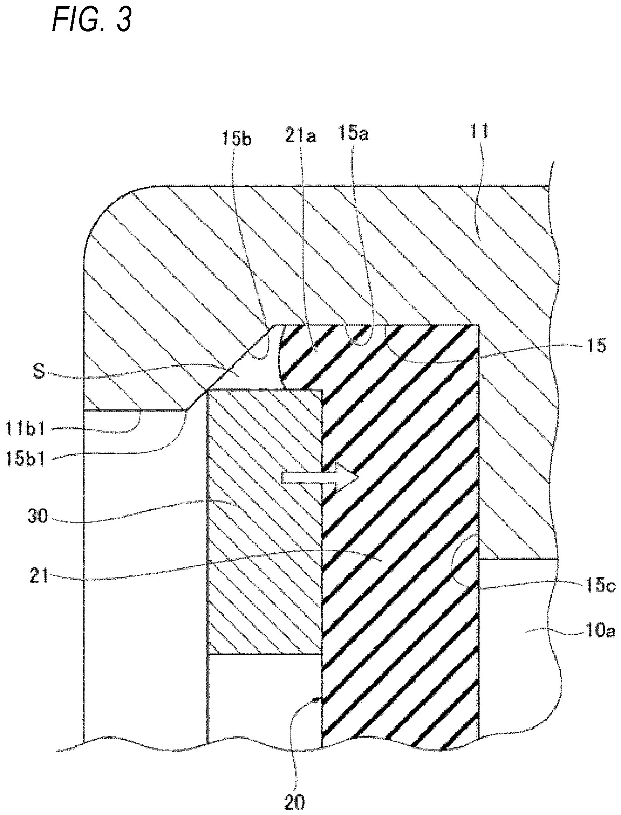

As shown in Fig. 3, the seal mounting groove 15 includes a groove bottom surface 15a that is in contact with an outer peripheral surface of the sealing member 20, a tapered surface 15b that is provided axially outboard of the groove bottom surface 15a, connects the groove bottom surface 15a and an outside inner peripheral surface 11b1 of the outer ring 11, and is in contact with the retaining ring 30, and a groove inner surface 15c that is provided axially inboard of the groove bottom surface 15a, and is in contact with an axial inner surface of the sealing member 20. The tapered surface 15b is formed such that a diameter thereof gradually increases toward an axially inboard side.

The outside inner peripheral surface 11b1 is a cylindrical surface formed between an outer end portion of the seal mounting groove 15 (an outer end portion 15b1 of the tapered surface 15b) and an axial end surface of the outer ring 11.

The sealing member 20 is fitted into the seal mounting groove 15, and the retaining ring 30 is fitted into the seal mounting groove 15, so that a diameter of the retaining ring 30 is increased, and an outer peripheral edge of an axial outer surface of the retaining ring 30 is in contact with the tapered surface 15b of the seal mounting groove 15. Accordingly, a force that attempts to expand radially outboard of the retaining ring 30 is converted into a force that presses the sealing member 20 axially inboard (a pressing force in a thrust direction) by the tapered surface 15b, and the base 21 of the sealing member 20 is sandwiched between the retaining ring 30 and the groove inner surface 15c.

Since the protruding portion 21a, which is a part of the radial outer end portion of the sealing member 20, protrudes towards a direction of the tapered surface 15b of the seal mounting groove 15, it is preferable that the protruding portion 21a is sandwiched between an inner peripheral surface of the seal mounting groove 15 (the groove bottom surface 15a in the present embodiment) and an outer peripheral surface of the retaining ring 30, and the protruding portion 21a is elastically deformed in the radial direction by a force that attempts to expand radially outboard of the retaining ring 30. The inner peripheral surface of the seal mounting groove 15 that sandwiches the radial outer end portion of the sealing member 20 may include the tapered surface 15b.

In this way, the protruding portion 21a protrudes towards the direction of the tapered surface 15b of the seal mounting groove 15 and is caught on the outer peripheral surface of the retaining ring 30, so that a binding force in the radial direction on the sealing member 20 is generated. Preferably, the protruding portion 21a, which is a part of the radial outer end portion of the sealing member 20, is sandwiched between the inner peripheral surface of the seal mounting groove 15 and the outer peripheral surface of the retaining ring 30, so that the binding force in the radial direction on the sealing member 20 is generated. That is, in the present embodiment, the binding force in the radial direction on the sealing member 20 that is does not exist in the related art is generated.

In consideration of dimensional tolerances of the seal mounting groove 15, the sealing member 20, the retaining ring 30, and the like, it is preferable that a space S is formed between the inner peripheral surface of the seal mounting groove 15 and the outer peripheral surface of the retaining ring 30.

As described above, according to the rolling bearing 10 of the present embodiment, the radial outer end portion of the sealing member 20 protrudes towards the direction of the tapered surface 15b of the seal mounting groove 15 and is caught on the outer peripheral surface of the retaining ring 30, so that the binding force in the radial direction on the sealing member 20 is generated. Preferably, since the radial outer end portion is sandwiched between the inner peripheral surface of the seal mounting groove 15 and the outer peripheral surface of the retaining ring 30, the binding force in the radial direction on the sealing member 20 can be generated. As a result, the binding force on the sealing member 20 can be further increased.

(Second Embodiment)

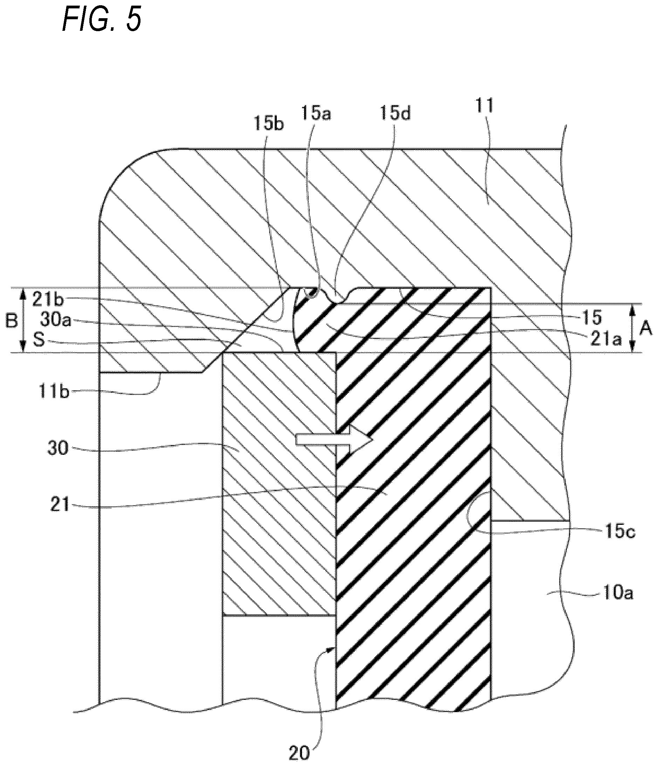

Next, the rolling bearing 10 according to a second embodiment will be described. Fig. 5 is an enlarged cross-sectional view of a periphery of the retaining ring 30 in the second embodiment. A configuration of the rolling bearing 10 in the second embodiment is different from that in the first embodiment in that a projecting portion 15d is disposed in the seal mounting groove 15. Since the configuration other than the projecting portion 15d in the second embodiment is the same as the configuration in the first embodiment, description thereof will be omitted.

As shown in Fig. 5, the groove bottom surface 15a of the seal mounting groove 15 of the outer ring 11 is provided with the projecting portion 15d projecting radially inboard. The projecting portion 15d is opposite to an outer peripheral surface 30a of the retaining ring 30 in the radial direction (up-down direction in Fig. 5). That is, the projecting portion 15d and the outer peripheral surface 30a of the retaining ring 30 overlap in the axial direction (left-right direction in Fig. 5).

The projecting portion 15d is located axially inboard (on a right side in Fig. 5) with respect to a tip 21b of the protruding portion 21a of the sealing member 20. That is, the projecting portion 15d and the protruding portion 21a of the sealing member 20 overlap in the axial direction.

Therefore, a radial distance A between an inner peripheral surface of the projecting portion 15d and the outer peripheral surface 30a of the retaining ring 30 is shorter than a radial distance B between the groove bottom surface 15a of the seal mounting groove 15 and the outer peripheral surface 30a of the retaining ring 30 in the vicinity of the tip 21b of the protruding portion 21a (A < B). As a result, the tip 21b of the protruding portion 21a (a portion of the protruding portion 21a that is axially outboard with respect to the projecting portion 15d) is constrained in the thrust direction, so that the binding force on the sealing member 20 can be further increased.

The projecting portion 15d may be formed on the entire circumference of the groove bottom surface 15a of the seal mounting groove 15, or may be formed on a part of the groove bottom surface 15a. When the projecting portion 15d is formed in an annular shape on the entire circumference of the groove bottom surface 15a, the sealing member 20 is difficult to come off and the projecting portion 15d can be easily processed.

(Third Embodiment)

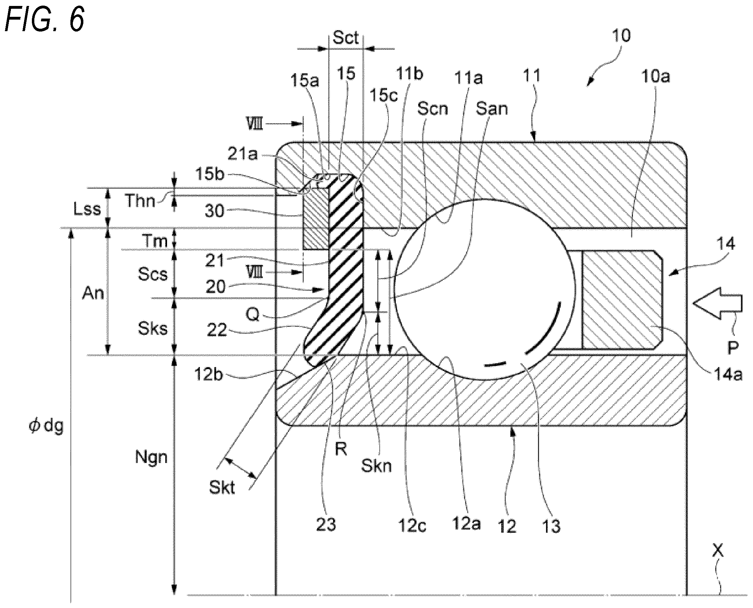

Next, the rolling bearing 10 according to a third embodiment will be described. Fig. 6 is a cross-sectional view showing a stopped state of the rolling bearing in the third embodiment. The rolling bearing 10 in the third embodiment has the same configuration as that in the first embodiment, and dimensional relations thereof with the sealing member 20 and the members around the sealing member 20 will be mainly described below. The same or equivalent reference numerals are given to the same configurations as those in the first embodiment, and description thereof is omitted.

In the sealing member 20 of the present embodiment, an inclination angle $\theta$ of the lip portion 22 with respect to the base 21 of the sealing member 20, that is, an angle formed between the radial direction of the base 21 and an extending direction of the lip portion 22, is 10° to 80°. When the inclination angle $\theta$ is smaller than the above range, contact resistance becomes excessive, and when the inclination angle $\theta$ is larger than the above range, flow resistance of the compressed air becomes excessive. The inclination angle $\theta$ is preferably 20° to 60°, and more preferably 25° to 50°.

The lip portion 22 is inclined (axially outboard) toward the radially inboard side and toward the downstream side in the compressed air supply direction, and can come into contact with the inclined surface 12b of the inner ring 12. A shape of an inner peripheral surface 23 of the lip portion 22 is an annular shape (conical surface shape). A shape of the inclined surface 12b of the inner ring 12 with which the lip portion 22 can come into contact is also an annular shape (conical surface shape). Therefore, the inner peripheral surface 23 of the lip portion 22 can come into contact with the inclined surface of the inner ring 12 over the entire circumference. That is, the sealing member 20 can seal the bearing internal space 10a between an inner peripheral surface 11b of the outer ring 11 and an outer peripheral surface 12c of the inner ring 12 over the entire circumference.

As shown in Fig. 6, the supplied compressed air flows into the bearing internal space 10a, and pressure of the compressed air acts on the sealing member 20. Then, the lip portion 22 is elastically deformed toward a downstream side of the flow of the compressed air. As a result, a contact area between the inner peripheral surface 23 of the lip portion 22 and the inclined surface 12b of the inner ring 12 becomes smaller than that in a case with no pressure of the compressed air. That is, the lip portion 22 is in an open state in which the compressed air is communicated.

Since the sealing member 20 does not include any metal insert and is made of only an elastic material, it has a structure that is easily elastically deformed as a whole. In particular, since the lip portion 22 does not interfere with the retaining ring 30 at all, the sealing member 20 is in a state of being easily elastically deformed and supported by the outer ring 11. Therefore, when the compressed air acts on the sealing member 20 beyond a specific pressure, an inner peripheral portion of the sealing member 20 is elastically deformed axially outboard, and the contact area between the inner peripheral surface 23 of the lip portion 22 and the inclined surface 12b of the inner ring 12 becomes smaller.

Therefore, in this configuration, even when supply pressure of the compressed air is relatively small, the lip portion 22 of the sealing member 20 is surely elastically deformed, and the contact area can be reduced.

As a result, the air turbine can be started smoothly, frictional resistance between the sealing member 20 and the inner ring 12 can be reduced, and ultra-high speed rotation of about 400,000 $min^{-1}$ of the rotation shaft 101 can be implemented. Since the inclined surface 12b is provided at an end portion of the outer peripheral surface 12c of the inner ring 12 on the downstream side in the compressed air supply direction, the flow of the compressed air passing between the lip portion 22 and the inclined surface 12b becomes smooth, and it is possible to implement ultra-high speed rotation that is even faster than the related art.

Here, in a state where the sealing member 20 is fixed to the seal mounting groove 15 of the outer ring 11 by the retaining ring 30, assuming that a radial length in which both side surfaces of the base 21 of the sealing member 20 in the axial direction are in contact with and sandwiched between the retaining ring 30 and the axial inner surface 15c of the seal mounting groove 15 of the outer ring 11 is Lss, and assuming that an inner diameter of the outer ring 11 is Φdg, the sealing member 20 is formed so as to satisfy the following Formula (1).

$$0.018 \leq \text{Lss}/\Phi\text{dg} \leq 0.093 \ ... \ (1)$$

By setting Lss/Φdg to 0.018 or more, it is possible to ensure the radial length in which the base 21 of the sealing member 20 is sandwiched between the retaining ring 30 and the seal mounting groove 15 of the outer ring 11, and when the compressed air is supplied, it is possible to reliably prevent the sealing member 20 from coming off from the seal mounting groove 15 of the outer ring 11. In order to more reliably prevent the sealing member 20 from coming off from the seal mounting groove 15 of the outer ring 11 when the compressed air is supplied, Lss/Φdg is preferably 0.027 or more, and is more preferably 0.035 or more.

By setting Lss/Φdg to 0.093 or less, the sealing member 20 can be appropriately opened and closed by the compressed air. From the above viewpoint, Lss/Φdg is preferably 0.074 or less, and more preferably 0.047 or less.

In the present embodiment, in the state where the sealing member 20 is fixed to the seal mounting groove 15 of the outer ring 11 by the retaining ring 30, an inner diameter of the retaining ring 30 is smaller than the inner diameter of the outer ring 11, and an inner peripheral surface of the retaining ring 30 is located on an inner diameter side of the inner peripheral surface of the outer ring 11.

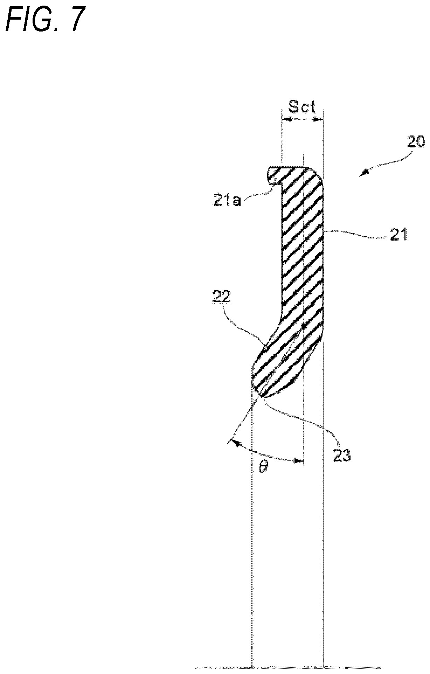

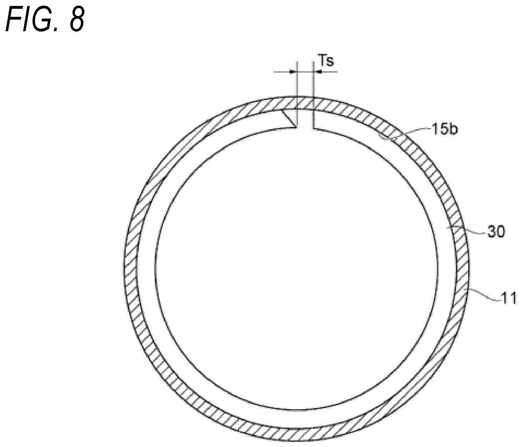

As shown in Figs. 6 to 8, assuming that a gap in the circumferential direction of the retaining ring 30 when the sealing member 20 and the retaining ring 30 are mounted on the seal mounting groove 15 of the outer ring 11 is Ts, and assuming that an axial thickness of a portion of the sealing member 20 that is in contact with the retaining ring 30 is Set, the sealing member 20 is formed so that a ratio of Ts to Set satisfies the following Formula (2).

$$1 \leq \text{Ts}/\text{Sct} \leq 10 \ ... \ (2)$$

By setting Ts/Sct to 10 or less, when the compressed air is supplied, the sealing member 20 is prevented from rising from the gap Ts in the circumferential direction of the retaining ring 30, and the sealing member 20 can be prevented from coming off from the seal mounting groove 15 of the outer ring 11. Therefore, Ts/Sct is preferably 6 or less, and more preferably 5 or less.

When Ts/Sct is less than 1, both end portions in the circumferential direction come into contact with each other when the diameter of the retaining ring 30 is reduced, and the diameter of the retaining ring 30 cannot be sufficiently reduced. Therefore, Ts/Sct needs to be 1 or more, and is preferably 2 or more, and more preferably 2.5 or more.

As shown in Fig. 6, in the sealing member 20, assuming that a radial length from an axially inboard inclined start portion R of the lip portion 22 to an outermost diameter position of a contact portion with the outer peripheral surface 12c of the inner ring 12 is Skn, and assuming that a thickness of the lip portion 22 in an inclined direction is Skt, the sealing member 20 is formed so as to satisfy the following Formula (3).

$$0.25 \leq \text{Skn}/\text{Skt} \leq 2.5 \ ... \ (3)$$

By setting Skn/Skt to 0.25 or more, a length in which the lip portion 22 receives the compressed air can be ensured, and the sealing member 20 can be brought into contact with the outer peripheral surface 12c of the inner ring 12 at an appropriate angle, and since the lip portion 22 is also easily deformed, the sealing member 20 is likely to be in non-contact with the outer peripheral surface 12c of the inner ring 12 even with a small amount of compressed air. In order to make it easier for the sealing member 20 to be in non-contact with the outer peripheral surface 12c of the inner ring 12, Skn/Skt is preferably 0.65 or more, and more preferably 0.90 or more.

On the other hand, when Skn/Skt is larger than 2.5, the length of the lip portion 22 becomes too long, a pressing force against the outer peripheral surface 12c of the inner ring 12 becomes large, and it is difficult to make contact at an appropriate angle, and therefore, when the amount of the compressed air is small, the sealing member 20 is unlikely to be in non-contact with the outer peripheral surface 12c of the inner ring 12. Therefore, Skn/Skt needs to be 2.5 or less, and is preferably 2.1 or less, and more preferably 1.75 or less.

In the present embodiment, the outermost diameter position of the contact portion of the sealing member 20 with the outer peripheral surface 12c of the inner ring 12 is a boundary portion between the inclined surface 12b and the cylindrical surface on the outer peripheral surface 12c of the inner ring 12, but the outermost diameter position may be an intermediate portion of the inclined surface 12b.

In the present embodiment, the thicknesses of the portions of the sealing member 20 in contact with the retaining ring 30, that is, the axial thickness Set of the base 21 and the thickness Skt in the inclined direction of the inclined portion 22 may be the same thickness, or may be different.

In the sealing member 20, assuming that a radial length between the axially inboard inclined start portion R of the lip portion 22 and the inner diameter of the retaining ring 30 when the sealing member 20 and the retaining ring 30 are mounted on the seal mounting groove 15 of the outer ring 11 is Scn, the sealing member 20 is formed so that a ratio of the above-mentioned radial length Skn to Scn satisfies the following Formula (4).

$$0.21 \leq \text{Skn/Scn} \leq 4.7 \ ... \ (4)$$

By setting Skn/Scn to 0.21 or more, the length of the lip portion 22 that receives the compressed air can be ensured between the inner diameter of the retaining ring 30 and the outer peripheral surface 12c of the inner ring 12, and the sealing member 20 can be brought into contact with the outer peripheral surface 12c of the inner ring 12 at an appropriate angle, so that the sealing member 20 is likely to be in non-contact with the outer peripheral surface 12c of the inner ring 12 even with a small amount of compressed air. In order to make it easier for the sealing member 20 to be in non-contact with the outer peripheral surface 12c of the inner ring 12, Skn/Scn is preferably 0.42 or more.

On the other hand, when Skn/Scn is larger than 4.7, the length of the lip portion 22 becomes too long and the sealing member 20 cannot be brought into contact with the outer peripheral surface 12c of the inner ring 12 at an appropriate angle, so that the sealing member 20 is unlikely to be in non-contact with the outer peripheral surface 12c of the inner ring 12 with a small amount of compressed air. Therefore, Skn/Scn needs to be 4.7 or less, and is preferably 1.6 or less.

Assuming that a radial length between the outermost diameter position of the contact portion of the sealing member 20 with the outer peripheral surface 12c of the inner ring 12 and an axial center X of the rolling bearing 1 is Ngn, the sealing member 20 is formed so that a ratio of the above-mentioned radial length Skn to Ngn satisfies the following Formula (5).

$$0.025 \leq \text{Skn/Ngn} \leq 0.25 \ ... \ (5)$$

By satisfying Formula (5), the length of the lip portion 22 that receives the compressed air can be ensured even for a rolling bearing having a predetermined dimension, and the sealing member 20 can be brought into contact with the outer peripheral surface 12c of the inner ring 12 at an appropriate angle, so that the sealing member 20 is likely to be in non-contact with the outer peripheral surface 12c of the inner ring 12 even with a small amount of compressed air. In order to make it easier for the sealing member 20 to be in non-contact with the outer peripheral surface 12c of the inner ring 12, it is preferable that $0.065 \leq \text{Skn/Ngn} \leq 0.21$, and it is more preferable that $0.090 \leq \text{Skn/Ngn} \leq 0.18$.

As shown in Fig. 6, in the sealing member 20, assuming that a radial length from an axially outboard inclined start portion Q of the lip portion 22 to the outermost diameter position of the contact portion with the outer peripheral surface 12c of the inner ring 12 is Sks, and assuming that an axial thickness of the lip portion 22 at the axially outboard inclined start portion Q is Set, the sealing member 20 is formed so as to satisfy the following Formula (6).

$$0.5 \leq \text{Sks/Sct} \leq 3 \ ... \ (6)$$

By setting Sks/Sct to 0.5 or more, the length of the lip portion 22 for receiving the compressed air and then opening to outside of the bearing can be ensured, and the sealing member 20 can be brought into contact with the outer peripheral surface 12c of the inner ring 12 at an appropriate angle, so that the sealing member 20 is likely to be in non-contact with the outer peripheral surface 21 of the inner ring 20 even with a small amount of compressed air. In order to make it easier for the sealing member 20 to be in non-contact with the outer peripheral surface 12c of the inner ring 12, Sks/Sct is preferably 0.75 or more, and more preferably 1 or more.

On the other hand, when Sks/Sct is larger than 3, the length of the lip portion 22 becomes too long, the pressing force against the outer peripheral surface 12c of the inner ring 12 becomes large, and it is difficult to make contact at an appropriate angle, and therefore, when the amount of the compressed air is small, the sealing member 20 is unlikely to be in non-contact with the outer peripheral surface 12c of the inner ring 12. Therefore, Sks/Sct needs to be 3 or less, and is preferably 2.5 or less, and more preferably 2 or less.

In the sealing member 20, assuming that a radial length between the axially outboard inclined start portion Q of the lip portion 22 and the inner diameter of the retaining ring 30 when the sealing member 20 and the retaining ring 30 are mounted on the seal mounting groove 15 of the outer ring 11 is Scs, the sealing member 20 is formed so that a ratio of the above-mentioned radial length Sks to Scs satisfies the following Formula (7).

$$0.35 \leq \text{Sks/Scs} \leq 3.75 \ ... \ (7)$$

By setting Sks/Scs to 0.35 or more, the length of the lip portion 22 that receives the compressed air can be ensured between the inner diameter of the retaining ring 30 and the outer peripheral surface 12c of the inner ring 12, and the sealing member 20 can be brought into contact with the outer peripheral surface 12c of the inner ring 12 at an appropriate angle, so that the sealing member 20 is likely to be in non-contact with the outer peripheral surface 12c of the inner ring 12 even with a small amount of compressed air. In order to make it easier for the sealing member 20 to be in non-contact with the outer peripheral surface 12c of the inner ring 12, Sks/Scs is preferably 0.62 or more.

On the other hand, when Sks/Scs is larger than 3.75, the length of the lip portion 22 becomes too long and the sealing member 20 cannot be brought into contact with the outer peripheral surface 12c of the inner ring 12 at an appropriate angle, so that the sealing member 20 is unlikely to be in non-contact with the outer peripheral surface 12c of the inner ring 12 with a small amount of compressed air. Therefore, Sks/Scs needs to be 3.75 or less, and is preferably 2.0 or less.

Assuming that the radial length between the outermost diameter position of the contact portion of the sealing member 20 with the outer peripheral surface 12c of the inner ring 12 and the axial center X of the rolling bearing 10 is Ngn, the sealing member 20 is formed so that a ratio of the above-mentioned radial length Sks to Ngn satisfies the following Formula (8).

$$0.05 \leq \text{Sks/Ngn} \leq 0.31 \ ... \ (8)$$

By satisfying Formula (8), the length of the lip portion 22 that receives the compressed air can be ensured even for a rolling bearing having a predetermined dimension, and the sealing member 20 can be brought into contact with the outer peripheral surface 12c of the inner ring 12 at an appropriate angle, so that the sealing member 20 is likely to be in non-contact with the outer peripheral surface 12c of the inner ring 12 even with a small amount of compressed air. In order to make it easier for the sealing member 20 to be in non-contact with the outer peripheral surface 12c of the inner ring 12, it is preferable that $0.10 \leq \text{Sks/Ngn} \leq 0.23$.

Assuming that a radial length between the inner peripheral surface 11b of the outer ring 11 and the inner peripheral surface of the retaining ring 30 in the state where the sealing member 20 is fixed to the seal mounting groove 15 of the outer ring 11 by the retaining ring 30 is Tm, and assuming that a radial length between the inner peripheral surface 11b of the outer ring 11 and the outer peripheral surface 12c of the inner ring 12 is An, the sealing member 20 is formed so that a ratio of Tm to An satisfies the following Formula (9).

$$0 \leq \text{Tm/An} \leq 0.5 \ ... \ (9)$$

By setting Tm/An to 0 or more, the sealing member 20 is less likely to come off from the outer ring 11 even when the compressed air is supplied. Considering tolerances such as depth and angle of the seal mounting groove 15 of the outer ring 11 and a radial thickness of the retaining ring 30, Tm/An is preferably 0.05 or more, and is more preferably 0.12 or more.

By setting Tm/An to 0.5 or less, the sealing member 20 is likely to be in non-contact with the outer peripheral surface 21 of the inner ring 20 when the compressed air is supplied. In order to make it easier for the sealing member 20 to be in non-contact with the outer peripheral surface 12c of the inner ring 12, Tm/An is preferably 0.28 or less.

Therefore, by satisfying Formula (9), when the compressed air is supplied, the sealing member 20 can be in non-contact with the outer peripheral surface 12c of the inner ring 12 even with a small amount of compressed air for energy saving, and the sealing member 20 is less likely to come off from the seal mounting groove 15 of the outer ring 11.

When the supply of compressed air to the turbine blade 122 is stopped due to drive stop of the dental air turbine hand piece, the pressure of the compressed air acting on the lip portion 22 decreases. Then, the lip portion 22 returns to the state shown in Fig. 6, and the inner peripheral surface 23 of the lip portion 22 comes into contact with the inclined surface 12b of the inner ring 12 over the entire circumference. That is, the lip portion 22 is closed, and the lip portion 22 functions as a brake for the inner ring 12. In this case, since the inner peripheral surface 23 of the lip portion 22 comes into contact with the inclined surface 12b of the inner ring 12 over the entire circumference, maximum braking effect from the frictional resistance between the sealing member 20 and the inner ring 12 can be obtained. Therefore, it is possible to stop the rotation shaft 121 fixed to the inner ring 12 most quickly.

Assuming that a radial length between the inner peripheral surface of the retaining ring 30 and the outer peripheral surface 12c of the inner ring 12 in the state where the sealing member 20 is fixed to the seal mounting groove 15 of the outer ring 11 by the retaining ring 30 is San, the sealing member 20 is formed so that a ratio of the above-mentioned axial thickness Sct of the base 21 to San satisfies the following Formula (10).

$$0.1 \leq \text{Sct/San} \leq 0.6 \ ... \ (10)$$

By setting Sct/San to 0.1 or more, the sealing member 20 can be pressed against the inner ring 12 and the air turbine can be quickly stopped when the compressed air is no longer supplied. In order to stop more quickly, Sct/San is preferably 0.15 or more, and more preferably 0.2 or more.

By setting Sct/San to 0.6 or less, the sealing member 20 is easily elastically deformed, so that the sealing member 20 is likely to be in non-contact with the outer peripheral surface 12c of the inner ring 12 when the compressed air is supplied. In order to make it easier for the sealing member 20 to be in non-contact with the outer peripheral surface 12c of the inner ring 12, Sct/San is preferably 0.4 or less, and more preferably 0.3 or less.

Therefore, by satisfying Formula (10), a quick stop when the compressed air is no longer supplied can be achieved for shortening treatment time and the like, and when the compressed air is supplied, the sealing member can be in non-contact with the outer peripheral surface of the inner ring even with a small amount of compressed air.

Assuming that a radial distance between the outer peripheral surface of the retaining ring 30 and the outer end portion 15a of the tapered surface 15 of the seal mounting groove 15 in the state where the sealing member 20 is fixed to the seal mounting groove 15 of the outer ring 11 by the retaining ring 30 is Thn, the sealing member 20 is formed so that Thn and the above-mentioned radial length Lss satisfy the following Formula (11).

$$0.05 \leq \text{Thn/Lss} \leq 1 \ ... \ (11)$$

By setting Thn/Lss to 0.05 or more, the radial length of the retaining ring 30 that fits into the seal mounting groove 15 can be ensured, so that when the compressed air is supplied, it is possible to reliably prevent the sealing member 20 from coming off from the seal mounting groove 15 of the outer ring 11. In order to more reliably prevent the sealing member 20 from coming off from the seal mounting groove 15 of the outer ring 11 when the compressed air is supplied, Thn/Lss is preferably 0.08 or more, and is more preferably 0.10 or more.

By setting Thn/Lss to 1 or less, a radial dimension of the retaining ring 30 is ensured, and the sealing member 20 and the retaining ring 30 can be easily mounted. In order to further facilitate the mounting of the sealing member 20 and the retaining ring 30, Thn/Lss is preferably 0.8 or less, and more preferably 0.6 or less.

Since the lip portion 22 of the sealing member 20, which is particularly easily elastically deformed, is configured to be in contact with the inclined surface 12b of the inner ring 12, a contact pressure between the sealing member 20 and the inclined surface 12b can be reduced as compared with a case where the sealing member 20 and the inclined surface 12b are in contact with each other in the radial direction. As a result, opening and closing operations of the sealing member 20 by the compressed air can be performed smoothly and with high responsiveness. The contact pressure can be reduced with a smaller pressure of the compressed air than that in the related art, and the rotation speed of the rotation shaft 121 can be further improved and a stop time can be shortened at the same time.

By providing the lip portion 22 at the tip of the sealing member 20 with a contact surface that comes into surface contact with the inclined surface 12b of the inner ring 12, surface pressure acting on the sealing member 20 is reduced, and wear is reduced. A sealing property is improved by increasing a contact area.

The contact surface of the lip portion 22 may be a surface that makes line contact with the inclined surface 12b of the inner ring 12. In that case, the frictional resistance is reduced as compared with the case of surface contact, and the reduction of frictional resistance is advantageous for high-speed rotation.

Especially in the dental air turbine hand piece, extremely high-speed rotation is required when sharpening teeth, and steep rotation stop performance within 2 seconds, preferably within 1 second is required when performing stop. According to this configuration, since the above-mentioned effects of increasing the rotation speed and shortening the stop time can be stably obtained, usability of the dental air turbine hand piece can be significantly improved.

When the dental air turbine hand piece is driven, the compressed air is less likely to leak from inside of the bearing as compared with a case without the sealing member, so that noise during driving is reduced and high quietness can be obtained.

As shown in Fig. 6, a pair of rolling bearings are disposed on the rotation shaft 121, but the sealing member 20 is disposed at one axial end portion opposite to an inlet of the compressed air of the outer ring 11. In this way, by spray-lubricating between the pair of rolling bearings, lubricating oil can be supplied into each rolling bearing from an end portion side of the bearing where the sealing member 20 is not disposed. Since the sealing member 20 is disposed on the opposite side to the spray-lubrication side, liquid leakage does not occur from each rolling bearing to outside of the head portion 110.

Dental air turbine hand pieces are usually autoclaved by high temperature cleaning and sterilization after use. Although an amount of lubricating oil in the rolling bearing is reduced by this treatment, since the sealing member 20 is disposed only at one axial end portion of the rolling bearing, the lubricating oil can be easily supplied from the other axial end portion. Therefore, the rolling bearing can always be in a good lubrication state, and the rotation shaft 121 can be stably driven to rotate.

The present invention is not limited to those exemplified in the above-mentioned embodiments, and can be modified appropriately within a scope not departing from the gist of the present invention.

The retaining ring is not limited to having the rectangular cross-section, and may have a circular cross-section.

The retaining ring may be formed with a tapered surface, and the seal mounting groove may be formed with a rectangular cross-section, so that the tapered surface of the retaining ring may be in contact with a corner portion of the seal mounting groove having the rectangular cross-section.

For example, in the cage 5 used for the rolling bearing 1 in the above embodiment, the rim portion 7 on one end side is disposed on the upstream side in the compressed air supply direction with respect to the balls 3, but the present invention is not limited thereto, and the rim portion 7 may be disposed on the sealing member side, which is the opposite side in the axial direction.

Since the sealing member is disposed only on one axial end side of the rolling bearing 1, the groove portion 13 of the outer ring 10 and the inclined surface 12b of the inner ring 20 are formed only on one axial end side, but the present invention is not limited thereto, and the groove portion 13 of the outer ring 10 and the inclined surface 12b of the inner ring 20 may be formed symmetrically on the other axial end side. In this case, one of the pair of inclined surfaces is not used, but in a process of assembling the rolling bearing, it is not necessary to be aware of an assembling direction, and the work process can be simplified.

The sealing member may have a constant wall thickness at the inclined portion, but the wall thickness may also be gradually reduced toward the radially inboard side. In this case, the thickness Skt in the inclined direction of the inclined portion 33 is the thickness of the thickest portion.

The present application is based on a Japanese patent application (Japanese Patent Application No. 2020-042731) filed on March 12, 2020 and a Japanese patent application (Japanese Patent Application No. 2021-017471) filed on February 5, 2021, the contents of which are incorporated herein by reference.

REFERENCE SIGNS LIST

    10: rolling bearing
    10a: bearing internal space
    11: outer ring
    11a: outer ring raceway surface
    11b: outside inner peripheral surface
    12: inner ring
    12a: inner ring raceway surface
    12b: inclined surface
    13: ball
    14: cage
    14a: rim portion
    15: seal mounting groove
    15a: groove bottom surface
    15b: tapered surface
    15c: groove inner surface
    15d: projecting portion
    20: sealing member
    21: base
    21a: protruding portion
    21b: tip

22: lip portion
30: retaining ring
30a: outer peripheral surface

Tm: radial length between inner peripheral surface of outer ring and inner peripheral surface of retaining ring when sealing member is fixed to groove portion of outer ring by retaining ring
An: radial length between inner peripheral surface of outer ring and outer peripheral surface of inner ring
San: radial length between inner peripheral surface of retaining ring and outer peripheral surface of inner ring when sealing member is fixed to groove portion of outer ring by retaining ring
Set: axial thickness of part of sealing member that comes into contact with retaining ring
Lss: radial length of both axial side surfaces of sealing member in contact with both retaining ring and groove portion of outer ring
Thn: radial distance between outer peripheral surface of retaining ring and outer end portion of tapered surface of groove portion when sealing member is fixed to groove portion of outer ring by retaining ring

**Claims**

1.  A rolling bearing, comprising:

    an outer ring including an outer ring raceway surface on an inner peripheral surface;
    an inner ring including an inner ring raceway surface on an outer peripheral surface;
    a plurality of rolling elements rotatably arranged between the outer ring raceway surface and the inner ring raceway surface; and
    a sealing member fixed to a seal mounting groove formed on an axial end portion of the outer ring by a retaining ring, the sealing member sealing an axial end portion of a bearing internal space between the outer ring and the inner ring, wherein
    the sealing member includes a protruding portion at a radial outer end portion, and
    an outer diameter of the sealing member is larger than an outer diameter of the retaining ring in the seal mounting groove.

2.  The rolling bearing according to claim 1, wherein
    the seal mounting groove includes:

    a groove bottom surface that is in contact with an outer peripheral surface of the sealing member,
    a tapered surface that is provided axially outboard of the groove bottom surface, connects the groove bottom surface and the inner peripheral surface of the outer ring, and is in contact with the retaining ring, and
    a groove inner surface that is provided axially inboard of the groove bottom surface, and is in contact with an axial inner surface of the sealing member.

3.  The rolling bearing according to claim 2, wherein
    the radial outer end portion of the sealing member is sandwiched between an inner peripheral surface of the seal mounting groove and an outer peripheral surface of the retaining ring.

4.  The rolling bearing according to claim 3, wherein
    a projecting portion is provided on the groove bottom surface of the seal mounting groove so as to be radially opposed to the outer peripheral surface of the retaining ring and axially inboard of a tip of the protruding portion of the sealing member.

5.  The rolling bearing according to any one of claims 1 to 4, wherein
    the rolling bearing is used for dental air turbines.

FIG. 1

*FIG. 2*

FIG. 3

FIG. 4

*FIG. 5*

FIG. 6

EP 4 119 808 A1

FIG. 7

FIG. 8

| **INTERNATIONAL SEARCH REPORT** | International application No. |
| | PCT/JP2021/010228 |

**A. CLASSIFICATION OF SUBJECT MATTER**

Int.Cl. F16C19/06(2006.01)i, F16C33/78(2006.01)i, F16J15/3204(2016.01)i, F16J15/3268(2016.01)i, A61C1/05(2006.01)i, A61C1/08(2006.01)i
FI: F16C33/78E, F16C19/06, F16J15/3204201, A61C1/05A, A61C1/08Z, F16J15/3268

According to International Patent Classification (IPC) or to both national classification and IPC

**B. FIELDS SEARCHED**

Minimum documentation searched (classification system followed by classification symbols)

Int.Cl. F16C19/06, F16C33/78, F16J15/3204, F16J15/3268, A61C1/05, A61C1/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2017-211076 A (NSK LTD.) 30 November 2017 (2017-11-30), paragraph [0024], fig. 2 | 1-2, 5<br>3-4 |
| Y | JP 2007-333142 A (NSK LTD.) 27 December 2007 (2007-12-27), paragraphs [0054]-[0056], fig. 8 | 3-4 |
| Y | Microfilm of the specification and drawings annexed to the request of Japanese Utility Model Application No. 45452/1989 (Laid-open No. 135369/1990) (KOYO SEIKO CO., LTD.) 09 November 1990 (1990-11-09), fig. 4, 5 | 4 |
| Y | JP 2003-240000 A (HITACHI CONSTRUCTION MACHINERY CO., LTD.) 27 August 2003 (2003-08-27), fig. 3 | 4 |

☐ Further documents are listed in the continuation of Box C. ☒ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 27 April 2021 | 11 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT
Information on patent family members

International application No.

PCT/JP2021/010228

| JP 2017-211076 A | 30 November 2017 | US 2020/0149590 A1 |
| | | paragraph [0071], fig. 2 |
| | | WO 2017/154935 A1 |
| | | EP 3428468 A1 |
| | | CN 108713108 A |
| JP 2007-333142 A | 27 December 2007 | (Family: none) |
| JP 2-135369 U1 | 09 November 1990 | (Family: none) |
| JP 2003-240000 A | 27 August 2003 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017211076 A
- JP 2020042731 A
- JP 2021017471 A